# EUROPEAN PATENT APPLICATION

(11) **EP 2 354 694 A2**
(43) Date of publication of application: **10.08.2011**
(21) Application number: 11152833.7
(22) Date of filing: 01.02.2011
(51) Int. Cl.: F24F 11/02

(54) **Frost protection system for condensate drain pipe**

(30) Priority: 08.02.2010 GB 1001999; 01.09.2010 GB 1014462
(71) Applicant: Haven Limited, Hythe Marina Village Hythe SO45 6DX (GB)
(72) Inventor: Henderson, Philip Rex, Hythe, SO45 6DX (GB); Henderson, James Ian, Eastleigh, SO53 4TP (GB)
(74) Representative: Targett, Kenneth Stanley

(57) **Abstract**

A frost protection system is described for a condensate drain pipe (10) for a boiler, air-conditioning unit etc to protect an outdoors run of the pipe. The system comprises an outdoors temperature sensor (24), a heater (40), and a controller (18) for activating the heater in dependence upon the temperature sensed by the sensor. The heater is in the form of a flexible line (for example an electrical cable with a resistive filament). The heater (or a connection for it) passes through a fitting (38) in the pipe indoors, and the heater extends along the inside of the outdoors run of the pipe. In cold weather, the controller activates the heater to produce heat inside the drain pipe and thus reduce the risk of the condensate freezing.

## Description

This invention relates to a frost protection system for an apparatus having a condensate drain pipe.

Various apparatuses produce condensate during normal operation, examples being condensing boilers, freezers, refrigerators and air-conditioning units. It is necessary to dispose of the condensate. Some small apparatuses are able to do this by evaporation. However, for larger apparatuses, it is necessary to drain the condensate away through a drain pipe. In some situations, the drain pipe can be routed internally of the building to the drainage system of the building in which the apparatus is sited. However, in other situations, for example when replacing a non-condensing boiler with a condensing boiler, it can often be very inconvenient and costly to access the building's drainage system internally of the building, and it is far more convenient to route the condensate drain pipe through a hole in an external wall of the building and then either to the building's drainage system externally of the building or to a soak-away.

When the condensate drain pipe is routed externally of the building, the condensate can, in cold weather, freeze in the drain pipe and block it. The condensate can then back up in the drain pipe to the apparatus. This can result in reduced efficiency of the apparatus, tripping-out of the apparatus and/or damage to the apparatus. It can also result in the drain pipe splitting or having its joints forced apart. Some plumbers carefully route the drain pipe externally of the building so that it always has a fall and/or use a pipe with an excessively large internal diameter in an attempt to prevent freezing of the condensate and blocking of the pipe. However, these attempts are rarely successful and/or they result in the appearance of the outside of the building being spoiled and/or they result in an increased cost of the drain pipe. It is, of course, possible to lag the drain pipe. Although lagging may help during a brief cold snap, it has little effect during prolonged cold spells. Also, lagging adds to the cost and makes the pipe more obtrusive.

An aim of the present invention, or at least of specific embodiments of it, is to prevent freezing in cold weather of condensate in such drain pipes and to do so in a convenient and unobtrusive way.

In accordance with one aspect of the present invention, there is provided a frost protection system for an apparatus having a condensate drain pipe, the system comprising: a temperature sensor; a heater (for example an electrical heater); and a controller for activating the heater in dependence upon the temperature sensed by the sensor (for example to activate the heater when the sensed temperature falls below a threshold value). The heater is in the form of a flexible line (for example an electrical cable with a resistive filament) for disposal in the drain pipe, and the system further comprises a fitting for the drain pipe to enable the flexible line, or a connection between the controller and the flexible line, to pass from the controller to the inside of the pipe.

In accordance with a second aspect of the invention, there is provided a building having: an external wall; an apparatus (such as a boiler, a refrigerator, a freezer and an air-conditioning unit) disposed inside the building and having a condensate drain pipe that passes through a hole in the wall; and a frost protection system according to the first aspect of the invention. The sensor is disposed outside the building; the fitting is fitted to the condensate drain pipe inside the building; and at least part of the heater is disposed inside the condensate drain pipe outside the building.

Accordingly, in cold weather, the controller can activate the heater to produce heat inside the drain pipe and thus reduce the risk of the condensate freezing. Because the heat is produced inside the pipe, it can act more directly on the water and less directly on the air surrounding the pipe than if the pipe were heated from the outside, and thus the amount of heat required is less. It is expected that, with the invention, it will even be possible to reduce the diameter of the drain pipe compared with the size that is typically used absent the invention. In addition to reducing the pipe cost, reducing the pipe size results in less air being heated in the pipe and possibly convecting the heat away.

In a specific embodiment of the invention, the fitting is in a form of a tee or coupler having first and second portions for connection to a first upstream portion and a second downstream portion, respectively, of the condensate drain pipe and a third portion to enable entry of the flexible line or the connection therefor. The tee or coupler may also have a fourth portion arranged to be fitted to a further pipe having a larger internal diameter than the external diameter of the second portion of the condensate drain pipe so that the second portion of the condensate drain pipe can run inside the further pipe. It has been found that less heat is required to prevent freezing of the condensate in a smaller diameter pipe (for example of 10mm diameter compared to 22mm diameter). Furthermore, the air gap that remains between the inner second portion of the condensate drain pipe and the further outer pipe provides thermal insulation which reduces heat loss from the inside of the inner second portion of the condensate drain pipe.

The system is preferably provided in combination with the second portion of the condensate drain pipe. It has been found that less heat is required to prevent freezing of the condensate the fewer the number of cold joints in the condensate drain pipe. Therefore, the second portion of the condensate drain pipe is preferably flexible (for example a length of polythene hose). Accordingly, despite any elbows that may be required in the further pipe, the second portion of the condensate drain pipe can wind its way along the inside of the further pipe without any joints.

The second portion of the tee or coupler is preferably provided as a separate element which is arranged to be connected to the remainder of the tee or coupler when the further pipe is fitted to the fourth portion of the tee or coupler. This enables, for example, a conventional 22mm equal tee to be employed having (i) one limb to receive the 22mm upstream portion of the condensate drain pipe, (ii) another limb to receive the flexible heater line (or the connection between the controller and the flexible heater line), and (iii) a further limb to receive both the separate element (to which the 10mm flexible hose is attached) and the 22mm further pipe.

In the case where the heater is electrical and has a resistive filament extending along the line, the line is preferably a coaxial cable, and the resistive filament preferably forms a central core of the coaxial cable.

The controller may be operable to control the current flow through the resistive filament or the voltage applied across the resistive filament.

It may be desirable to cut the length of the filament to suit the installation. The resistance of a resistive filament is proportional to its length. With a particular voltage applied between the ends of the filament, the heat production per unit length is inversely proportional to the square of the length of the filament. If voltage control alone is employed, there is a risk that with short lengths of filament, the filament may become excessively hot and damage its insulation. To avoid this, if voltage control is employed, the system may further include a limiter for limiting the flow of electrical current through the resistive element. For a particular limited current flowing through the filament, the heat production per unit length is independent of the length of the filament.

The controller is preferably operable to control the heater in dependence upon the amount by which the sensed temperature is below a threshold value, for example, increasing the heating effect linearly the greater the temperature difference. The controller preferably employs pulse-width modulation to control the heater.

The system will typically include a sensor line for connecting the sensor to the controller. In this case, the first-mentioned fitting may be arranged also to enable the sensor line to pass from the controller to the inside of the condensate drain pipe. Alternatively, the system may further include a second fitting to enable the sensor line to pass from the controller to the inside of the condensate drain pipe. In either case, it becomes unnecessary to drill a further hole through the wall so that the sensor line can pass through the wall. If the sensor line passes along the inside of the condensate drain pipe, the sensor may be sited in the pipe, but preferably beyond the far end of the heater, or the sensor may be sited beyond the far end of the drain pipe. Alternatively, such a second fitting may be used to enable the sensor line to pass, outside the building, from the inside of the condensate drain pipe to the sensor outside the pipe.

Specific embodiments of the present invention will now be described, purely by way of example, with reference to the accompanying drawings, in which:
- Figure 1: is a schematic diagram of a first embodiment of the invention;
- Figure 2: is a schematic diagram of a second embodiment of the invention;
- Figure 3: is a schematic diagram of a third embodiment of the invention;
- Figure 4A: is a sectioned side view of a first example of a fitting for the drain pipe;
- Figures 4B & C: are isometric views of a bung of the fitting of Figure 4A in relaxed and compressed states respectively;
- Figure 5A: is a sectioned side view of a second example of a fitting for the drain pipe;
- Figures 5B & C: are isometric views of a gland member of the fitting of Figure 5A in relaxed and compressed states respectively;
- Figure 6A: is a sectioned side view of a third example of a fitting for the drain pipe;
- Figures 6B & C: are isometric views of a bung of the fitting of Figure 6A in relaxed and compressed states respectively;
- Figure 7: is a sectioned side view of a fourth example of a fitting for the drain pipe;
- Figure 8: is a sectioned side view of a fifth example of a fitting for the drain pipe;
- Figure 9: is an exploded sectioned side view of a sixth example of a fitting and an alternative drain pipe; and
- Figure 10: is similar to Figure 9, but after the component parts have been assembled.

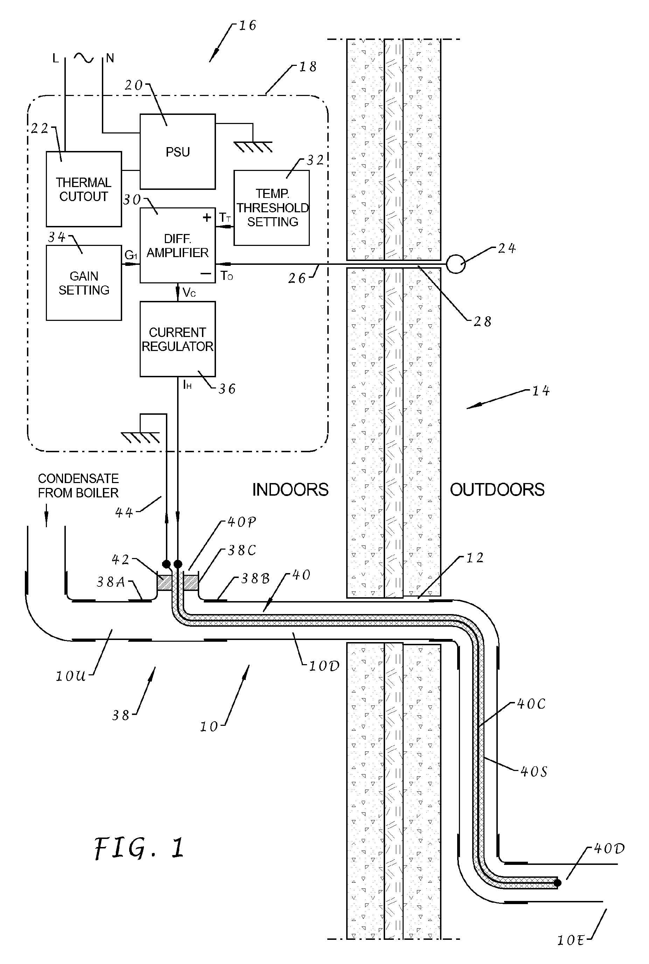

Referring to Figure 1, in the first embodiment of the invention, a condensing boiler (not shown) is sited in a building, and a condensate drain pipe 10 leads from the boiler and through a hole 12 in a wall 14 of the building to the outdoors side of the wall.

A frost protection unit 16 has a housing 18 mounted indoors on or adjacent the wall 14 and the drain pipe 10. The housing 18 contains an electrical circuit including a power supply unit 20 which is fed with mains electricity via a thermal cut-out 22. The connections from the power supply unit 20 to the other components of the circuit are, for simplicity, not shown in the drawing.

A temperature sensor 24 (such as a thermistor or semiconductor sensor) is sited outside the building and is connected by a cable 26 passing through a further hole 28 in the wall 14 to the frost protection unit 16. The sensor 24 produces a signal dependent on the temperature To outside the building, which is supplied to the inverting input of a differential amplifier 30. On its non-inverting input, the differential amplifier 30 receives a signal from a threshold temperature setting device 32 (such as a fixed resistor of a chosen value or a variable resistor) representing a threshold temperature T_{T}. Typically, the threshold temperature T_{T} will be set to 5 Celsius. The differential amplifier 30 also receives a signal from a gain setting device 34 (such as a fixed resistor of a chosen value or a variable resistor) representing a gain G₁. The differential amplifier produces an output control signal having a voltage Vc representing a desired output current from the unit 16. If the outside temperature T_{O} is greater than the threshold temperature T_{T}, the control voltage Vc is zero. However, if the outside temperature T_{O} is less than or equal to the threshold temperature T_{T}, the control voltage Vc is generated according to V_{C} = G₁.(T_{T} - T_{O}). The control voltage Vc is supplied to a current regulator 36 having a preset gain G₂ which produces a short-term-average output current I_{H} given by I_{H} = G₂.V_{C}. The output current I_{H} is therefore zero if the outside temperature T_{O} is greater than the threshold temperature, but is given by I_{H} = G₂.G₁.(T_{T} - T_{O}) if the outside temperature T_{O} is less than or equal to the threshold temperature T_{T}.

The current regulator 36 may regulate the output current I_{H} by progressively varying the output current I_{H} with progressive variations in the control voltage V_{C}. Alternatively, the current regulator 36 may pulse-width-modulate the output from the PSU 20 at a suitable frequency with a varying mark:space ratio so as to vary the short-term RMS value of the output current I_{H}. The latter option is preferred for reasons of efficiency.

A tee 38 is fitted into the drain pipe 10 adjacent the frost protection unit 16. Upstream and downstream portions 10U, 10D of the drain pipe 10 are connected to two of the limbs 38A,38B of the tee 38 using conventional plumbing methods, and a flexible heater cable 40 enters the drain pipe 10 through a seal 42 in the other limb 38C of the tee 38. The heater cable 40 passes along the downstream portion 10D of the pipe 10 almost as far as its far end 10E.

The heater cable 40 is a coaxial cable having a central resistive core 40C of, for example, constantan, and a braided conductive shield 40S of copper, with an intermediate insulator between the core 40C and shield 40S and an insulating sheath around the shield 40S. At the distal end 40D of the heater cable 40, the core 40C and shield 40S are connected together. At the proximal end 40P of the heater cable 40, the core 40C and shield 40S are connected to the cores of a two-core cable 44 which are connected at their opposite ends to the output from the current regulator 36 and to the electrical ground of the unit 16. The heater current I_{H} therefore passes through the heater cable 40.

If the heater cable 40 has a resistance per unit length p Ω/m, the heating power H per unit length of the cable 40 is given by H = I_{H}².ρ. When the outside temperature T_{O} is greater than the threshold temperature T_{T}, the heating power H per unit length of the cable 40 is zero. When the outside temperature T_{O} is less than or equal to the threshold temperature T_{T}, the heating power H per unit length of the cable 40 is given by H = [G₂.G₁.(T_{T} - T_{O})]².ρ. The values of G₂, G₁ and p are chosen by trial and error so that the heating power H per unit length of the cable 40 is sufficient to prevent condensate in the drain pipe 10 freezing in all but the most extreme cold weather.

It will be noted that the heating power H per unit length of the cable is independent of the length of the heating cable 40. The heating cable 40 can therefore be cut in length, if desired, and have its cut end reconnected without it substantially affecting how hot the cable 40 will become.

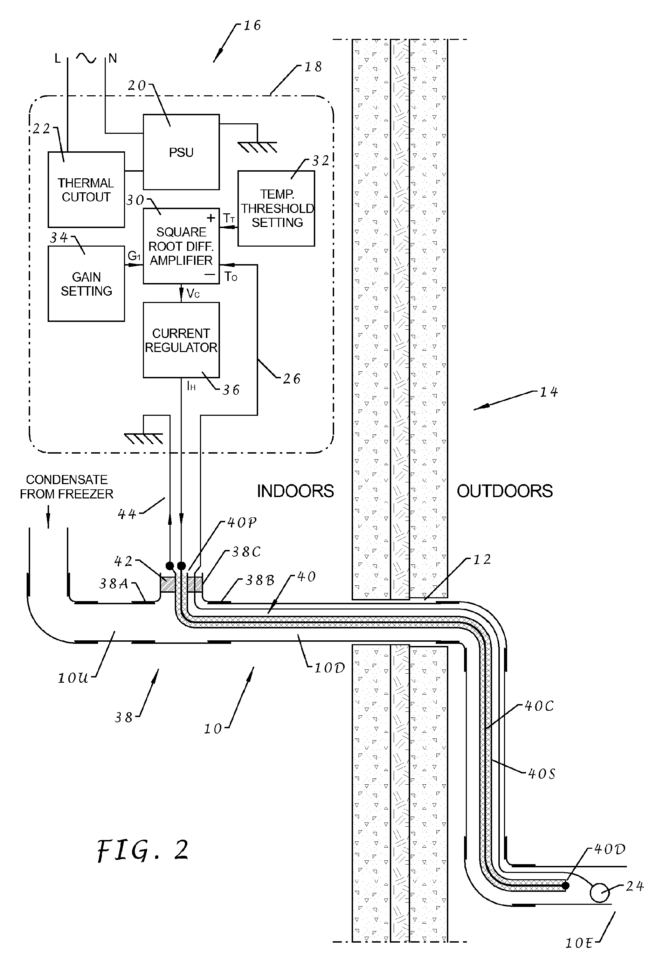

Referring now to Figure 2, the second embodiment of the invention is similar to the first embodiment described with reference to Figure 1, except in the following three respects.

First, the drain pipe 10 is connected to the condensate outlet of a freezer (not shown), rather than a boiler.

Second, the sensor cable 26 does not pass through a separate hole 28 in the wall 14. Instead it passes into the drain pipe 10 through the seal 42 of the fitting 38 and extends along the downstream portion 10D of the pipe 10 to its far end 10E where the temperature sensor 24 is disposed, sufficiently spaced from the heater cable 40 so that the sensor is substantially unaffected by heat from the heater cable 40. Alternatively, the sensor cable 26 could extend beyond the far end 10E of the pipe 10.

Third, the differential amplifier 30 performs a square root operation on its output V_{C} so that, if the outside temperature T_{O} is less than or equal to the threshold temperature T_{T}, the control voltage Vc is generated according to V_{C} = √[G₁.(T_{T} - T_{O})]. As a result, if the outside temperature T_{O} is less than or equal to the threshold temperature T_{T}, the heating power H per unit length of the cable 40 is given by H = G₂².G₁.(T_{T} - T_{O}).ρ and is linearly related to the temperature difference rather than the square of the temperature difference. Again, the current regulator 36 may employ amplitude modulation of the output current I_{H}, or more preferably pulse-with modulation.

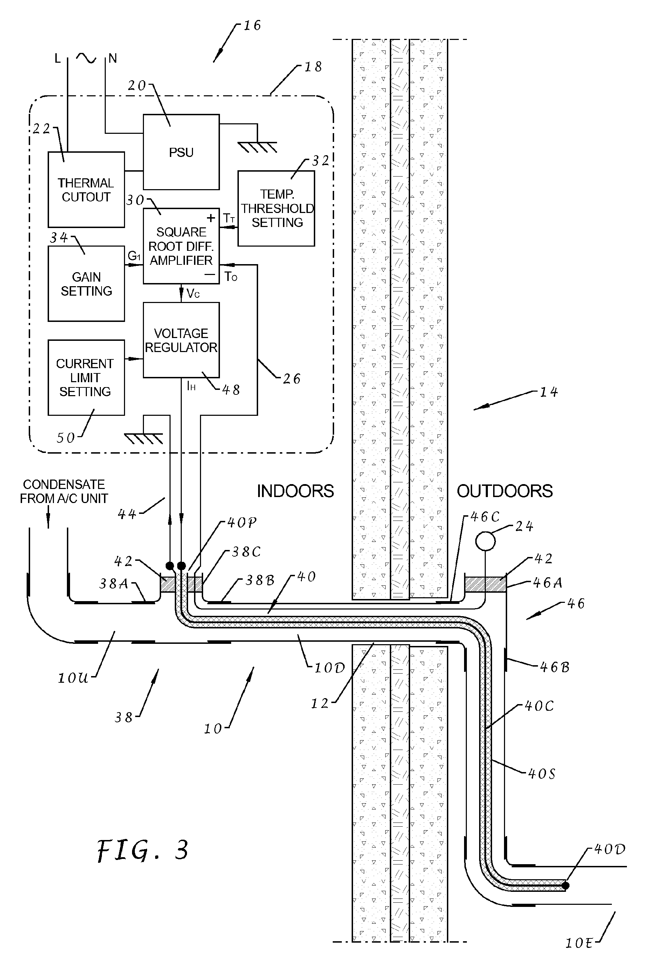

Referring now to Figure 3, the third embodiment of the invention is similar to the second embodiment described with reference to Figure 2, except in the following four respects.

First, the drain pipe 10 is connected to the condensate outlet of an air conditioning unit (not shown), rather than a freezer.

Second, the sensor cable 26 does not extend to the far end 10E of the drain pipe 10, but instead exits from the drain pipe 10 through a seal 42 at a second tee 46 immediately on the outdoors side of the wall 14. The second tee 46 is similar to the first tee 38, but the seal 42 is provided in one of the aligned limbs 46A of the tee 46, and the portions of the drain pipe 10 are connected to the other two right-angled limbs 46B,C of the tee 46. The sensor 24 may be mounted on the wall 14 adjacent the tee 46.

Third, a voltage regulator 48 is employed in place of the current regulator 36 of Figure 2. The voltage regulator 36 has a preset gain G₃ and produces an output voltage V_{H} given by V_{H} = G₃.V_{C}. The output voltage V_{H} is therefore zero if the outside temperature T_{O} is greater than the threshold temperature, but is given by V_{H} = G3.√[G₁(T_{T} - T_{O})] if the outside temperature T_{O} is less than or equal to the threshold temperature T_{T}. The heating power per unit length H of the cable 40 is given by H = V_{H}²/(L².ρ), where L is the length of the heater cable 40. When the outside temperature T_{O} is greater than the threshold temperature T_{T}, the heating power H per unit length of the cable 40 is zero. When the outside temperature T_{O} is less than or equal to the threshold temperature T_{T}, the heating power H per unit length of the cable 40 is given by H = G₃².G₁.(T_{T} - T_{O})/(L².ρ). The values of G₃, G₁, L and p are chosen by trial and error so that the heating power H per unit length of the cable 40 is sufficient to prevent condensate in the drain pipe 10 freezing in all but the most extreme cold weather. Again, voltage regulator 48 may employ amplitude modulation of the output voltage V_{H} and therefore of the output current I_{H}, or more preferably pulse-with modulation.

Fourth, it will be noted that, in the third embodiment of Figure 3, the heating power H per unit length of the cable is not independent of the length of the cable 40, but instead is inversely proportional to the square of the length L of the cable 40. Therefore, if the heating cable 40 is cut in length, it may become excessively hot in use. To prevent this, the voltage regulator 48 has an upper limit on its output current I_{H} set by a current limit setting device 50 (such as a fixed resistor).

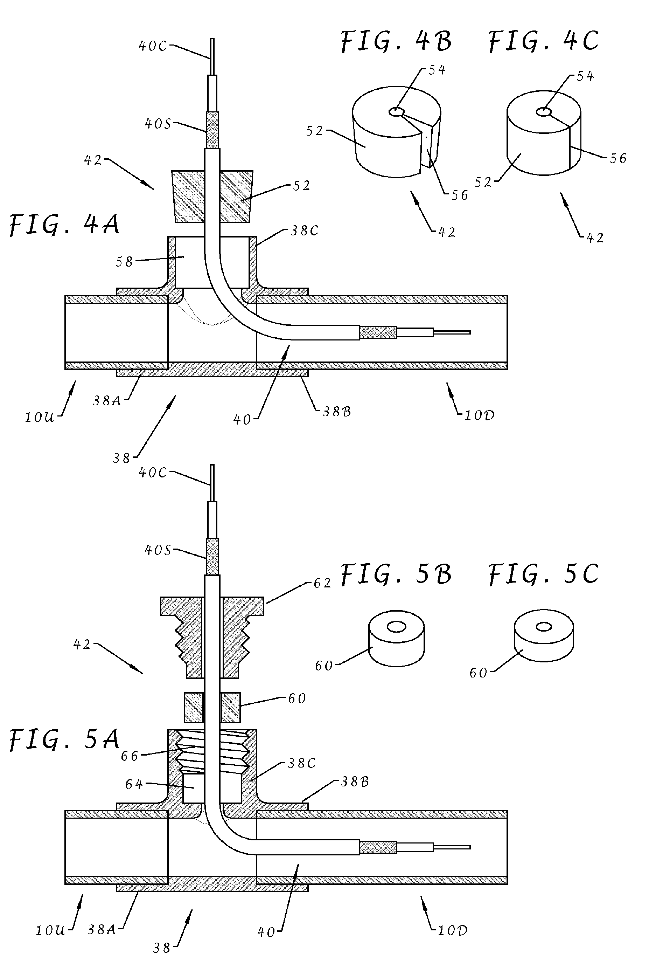

The tee 38 and seal 42 shown in Figure 1 are shown in greater detail in Figures 4A-C., The tee 38 is of conventional form. The seal 42 for the tee 38 is provided by a resilient tapered bung 52 having a central hole 54 for the heater cable 40 and a slit 56 extending from the hole 54 to the edge of the bung 52 to enable the bung 52 to be forced sideways onto the cable 40. When the bung 52 is inserted into the socket 58 of the limb 38C of the tee 38, the slit 56 closes up and the bung 52 is compressed between the cable 40 and the socket 58 to seal the cable 40 to the tee 38.

An alternative tee 38 and seal 42 are shown in Figures 5A-C. The seal 42 is in the form of a squash gland having a resilient annular gland member 60 and a gland nut 62. The limb 38C of the tee 38 has a cavity 64 and an internal thread 66 to form the housing for the squash gland. The gland member 60 and nut 62 are slid along the heater cable 40 to the required position. The gland member 60 is inserted into the cavity 64 and the nut 62 is screwed into the gland housing so as to compress the gland member 60 so that it seals with the cable 40 and the tee 38. The gland member 60 may be slit, similarly to the bung 52 of Figures 4A-C, so that it can be fitted sideways onto the cable 40.

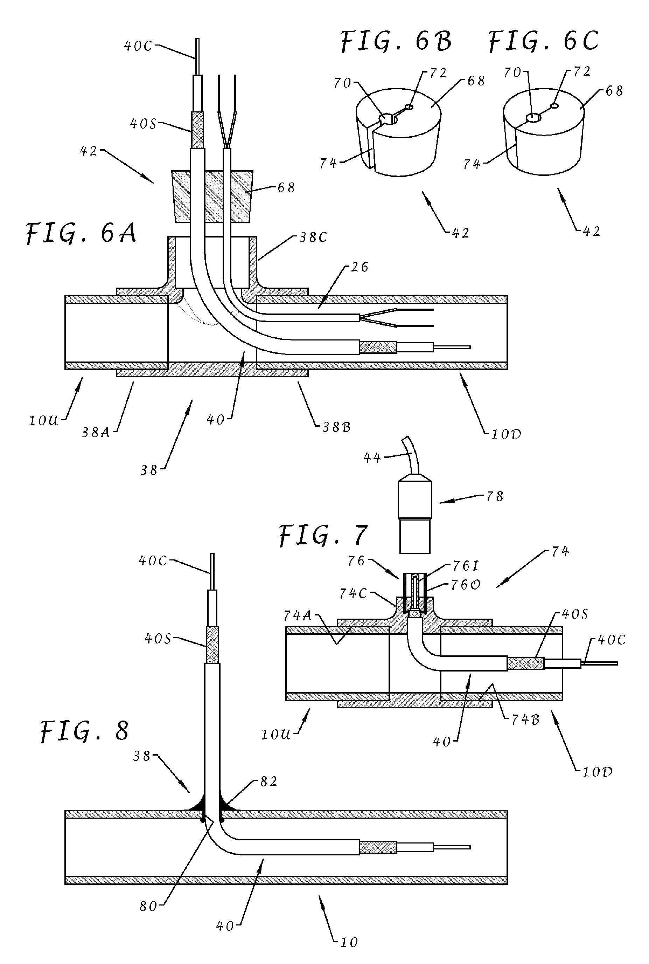

The tee 38 and seal 42 shown in Figure 2 are shown in greater detail in Figures 6A-C. The seal 42 is provided by a bung 68 similar to the bung 52 of Figures 4A-C, except that the bung 68 has two holes 70,72 for the heater cable 40 and sensor cable 26, respectively, a slit 74 extending between the holes 70,72 and from the hole 70 to the edge of the bung 68 to enable the bung 52 to be forced sideways onto both cables 40,26.

Figure 7 shows an alternative fitting 74 for sealing the heater cable 40 to the drain pipe 10. The fitting 74 is generally in the form of a moulded plastics straight coupler having sockets 74A,B for connecting the upstream and downstream portions 10U,D of the pipe 10. However, inner and outer contacts 761,O of a phono plug are connected to the core and shield 40C,S of the cable 40 and are moulded into a bulge 74C in the wall of the fitting 74 during moulding of the fitting 74 so as to form a phono plug 76 projecting from the wall of the fitting 74. The end of the cable 44 from the frost protection unit 16 is fitted with a complementary phono line socket 78 which is connected to the phono plug 76. Similar principles may be employed for connecting the sensor cable 26 through the wall of the pipe 10, and for connecting both the heater cable 40 and the sensor cable 26 through the wall of the pipe at the same fitting.

Figure 8 shows an alternative method of sealing the heater cable 40 (or sensor cable 26) to the drain pipe 10. In this case, a hole 80 is drilled through the wall of the pipe 10. The cable 40,26 is then threaded through the hole to the required position. A bead 82 of roomtemperature-vulcanising (RTV) silicone rubber is then applied around the cable 40,26 and allowed to cure so as to seal the cable 40,26 to the pipe 10. For the purposes of this specification, a bead 82 of rubber or the like is intended to be covered by the term "fitting" .

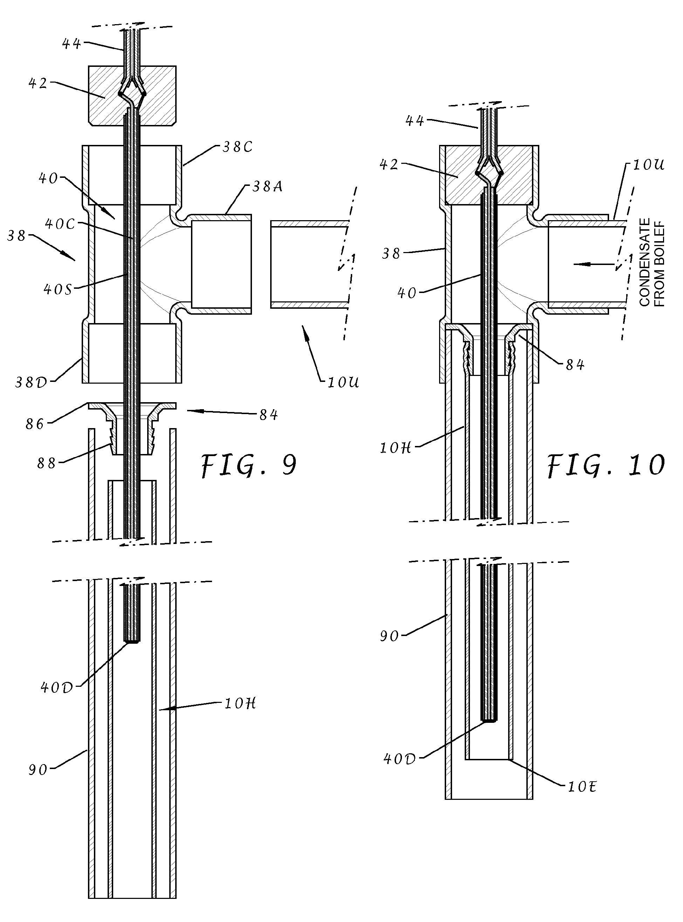

Figures 9 and 10 show a further fitting and arrangement of condensate drain pipe. The fitting includes a conventional 22mm equal tee 38 and a reducer 84, both of rigid plastics material. The 22mm upstream portion 10U of the condensate drain pipe, leading from a boiler, is of rigid plastics material which is solvent-welded into the central limb 38A of the tee 38. The reducer 84 is moulded from plastics material and has a flange portion 86 which is a snug fit in the lower limb 38D of the tee 38 and a downwardly-projecting spigot portion 88 to which the upper end of a length of flexible polythene hose 10H is fitted. The hose 10H runs through a further 22mm pipe 90 of rigid plastics material which may have various elbows and couplers (not shown) and which passes through the wall of the building (not shown) from the inside to the outside. The upper end of the further pipe 90 is solvent-welded into the lower limb 38D of the tee 38 after the reducer 84 has been fitted. The connection between the heater cable 40 and its supply cable 44 is moulded into a bung 42 which is solvent-welded into the upper limb 38C of the tee 38. The heater cable 40 therefore extends from the bung 42, through the tee 38 and spigot portion 88 of the reducer 84 and then runs along the inside of the hose 10H so that the distal end 40D of the heater cable 40 is adjacent the distal end 10E of the hose 10H.

The cross-sectional diameter of the heater cable 40 is substantially less than the inner diameter of the spigot portion 88 of the reducer 84 and the inner diameter of the hose 10H so that condensate from the boiler can flow from the upper portion 10U of the condensate drain pipe 10U, through the tee 38, spigot portion 88 and hose 10H, to the open distal end 10E of the hose 10H. The hose 10H therefore forms the downstream portion of the condensate drain pipe. The hose 10H is preferably provided as one continuous length so that, outside the building, there are no joints or very sharp bends in the hose 10H to promote the seeding of ice crystals. Also, the provision of two layers material (i.e. of the hose 10H and the further pipe 90) and the air gap 92 between them increase the thermal insulation between the heater cable 40 and the outside air, as compared with the heater cable 40 simply running through a 22mm pipe, so that the heater cable 40 needs to produce less heat in order to prevent the condensate freezing in the hose 10H. Furthermore, the further pipe 90 provides physical protection for the flexible hose 10H.

The sensor 24 and sensor cable 26 are not shown in Figures 9 and 10. The sensor cable 26 may be routed to the outside of the building independently of the condensate drain pipe, as in Figure 1, or it may be fed through the hose 10H as in Figures 2 and 3, or it may be fed through the air gap 92 between the hose 10H and the further pipe 90.

It will be appreciated that many modifications and developments may be made to the embodiments of the invention described above. For example, the amplifier 30 may have a transfer function other than linear or square root. Also, any of the embodiments described above may be modified to employ the method of any of the other embodiments (i) of connecting the heater cable 40 to its supply cable 44, (ii) of passing the heater cable 40 and/or supply cable 44 from the outside to the inside of the condensate drain pipe 10; and (iii) of passing the sensor cable between the outside and the inside of the condensate drain pipe 10.

It should be noted that the embodiments of the invention have been described above purely by way of example and that many other modifications and developments may be made thereto within the scope of the present invention.

## Claims

1. A frost protection system for an apparatus having a condensate drain pipe (10), the system comprising:
a temperature sensor (24);
a heater (40); and
a controller (18) for activating the heater in dependence upon the temperature sensed by the sensor;
wherein:
the heater is in the form of a flexible line (40) for disposal in the drain pipe; and
the system further comprises a fitting (38) for the drain pipe to enable the flexible line,
or a connection between the controller and the flexible line, to pass from the controller to the inside of the pipe.

2. A system as claimed in claim 1, wherein:
the fitting is in a form of a tee (38) or coupler (74) having first and second portions (38A,B; 74A,B; 38A,88) for connection to a first upstream portion (10U) and a second downstream portion (10D; 10H), respectively, of the condensate drain pipe and a third portion (38C; 74C) to enable entry of the flexible line or the connection therefor.

3. A system as claimed in claim 2, wherein:
the tee or coupler has a fourth portion (38D) arranged to be fitted to a further pipe (90) having a larger internal diameter than the external diameter of the second portion (10H) of the condensate drain pipe so that the second portion of the condensate drain pipe can run inside the further pipe.

4. A system as claimed in claim 3, wherein:
the system is provided in combination with the second portion (10H) of the condensate drain pipe; and
the second portion of the condensate drain pipe is flexible.

5. A system as claimed in claim 3 or 4, wherein:
the second portion (88) of the tee or coupler is provided as a separate element (84) which is arranged to be connected to the remainder (38) of the tee or coupler when the further pipe is fitted to the fourth portion (38D) of the tee or coupler.

6. A system as claimed in any preceding claim, wherein:
the heater is electrical and has a resistive filament (40C) extending along the line.

7. A system as claimed in claim 6, wherein:
the line is a coaxial cable (40).

8. A system as claimed in claim 7 when dependent on claim 6, wherein:
the resistive filament forms a central core (40C) of the coaxial cable.

9. A system as claimed in any preceding claim, wherein:
the controller is operable to activate the heater when the temperature sensed by the sensor falls below a predetermined value

10. A system as claimed in any preceding claim, wherein:
the controller is operable to control the heater in dependence upon the amount by which the sensed temperature is below the predetermined value.

11. A system as claimed in any preceding claim, wherein:
the controller employs pulse-width modulation to control the heater.

12. A system as claimed in any preceding claim, further including:
a sensor line (26) for connecting the sensor to the controller.

13. A system as claimed in claim 12, wherein:
the fitting (38) is arranged to enable the sensor line to pass from the controller to the inside of the condensate drain pipe.

14. A system as claimed in claim 12 or 13, further including:
a second fitting (46) to enable the sensor line to pass from the controller to the inside of the condensate drain pipe, or to enable the sensor line to pass from the inside of the condensate drain pipe to the sensor outside the condensate drain pipe.

15. A building having:
an external wall (14);
an apparatus disposed inside the building and having a condensate drain pipe (10) that passes through a hole (12) in the wall; and
a frost protection system as claimed in any preceding claim;
wherein:
the sensor (24) is disposed outside the building;
the fitting (38) is fitted to the condensate drain pipe inside the building; and
at least part of the heater (40) is disposed inside the condensate drain pipe outside the building.
